# EUROPÄISCHE PATENTSCHRIFT

(11) **EP 2 115 948 B1**
(45) Veröffentlichungstag und Bekanntmachung des Hinweises auf die Patenterteilung: **11.08.2010**
(21) Anmeldenummer: 08701127.6
(22) Anmeldetag: 16.01.2008
(51) Int. Cl.: H04L 12/40, G06F 13/42, H04L 29/06

(54) **VERFAHREN UND ANLAGE ZUR OPTIMIERTEN ÜBERTRAGUNG VON DATEN ZWISCHEN EINER STEUEREINRICHTUNG UND MEHREREN FELDGERÄTEN**
METHOD AND INSTALLATION FOR THE OPTIMIZED TRANSMISSION OF DATA BETWEEN A CONTROL DEVICE AND A PLURALITY OF FIELD DEVICES
PROCÉDÉ ET ÉQUIPEMENT DE TRANSMISSION OPTIMISÉE DES DONNÉES ENTRE UN DISPOSITIF DE COMMANDE ET PLUSIEURS APPAREILS DE TERRAIN

(30) Priorität: 22.01.2007 DE 102007004044
(43) Veröffentlichungstag der Anmeldung: 11.11.2009
(73) Patentinhaber: Phoenix Contact GmbH & Co. KG, 32825 Blomberg (DE)
(72) Erfinder: BREIT, Eugen, 32825 Blomberg (DE); JASPERNEITE, Jürgen, 32839 Steinheim (DE); JESCHIN, Jörg, 37574 Einbeck (DE); LESSMANN, Gunnar, 33039 Nieheim (DE)
(74) Vertreter: Kampfenkel, Klaus
(86) Internationale Anmeldenummer: PCT/EP2008/000280
(87) Internationale Veröffentlichungsnummer: WO 2008/089901

(56) Entgegenhaltungen:
- US-A1- 2002 042 845
- US-A1- 2006 088 196
- US-A1- 2006 161 705

## Beschreibung

Die Erfindung betrifft ein Verfahren zur optimierten Übertragung von Daten zwischen einer Steuereinrichtung und mehreren Feldgeräten, die über ein IP-basiertes Kommunikationsnetz miteinander verbunden sind, wobei die Datenübertragung unter Verwendung eines Profinet-Protokolls gesteuert wird. Weiterhin betrifft die Erfindung eine Steuer- und Datenübertragungsanlage, die insbesondere zur Durchführung des Verfahrens geeignet ist.

In der Automatisierungstechnik wird unter anderem der Profinet-Standard eingesetzt, der die Steuerung von Feldgeräten, wie zum Beispiel Sensoren und Aktoren, durch eine übergeordnete Steuereinrichtung unterstützt.

Eine Version des Profinet-Standards ist Profinet-IO, welches auf der Ethernet-Technologie basiert. Profinet-IO wurde innerhalb der Profibus-Nutzerorganisation entwickelt und in der IEC61158/IEC61784 standardisiert. Profinet-IO unterstützt ein sogenanntes Provider-Consumer-Modell, bei welchem Daten von einer Datenquelle, die Provider genannt wird, zu einer Datensenke, die Consumer genannt wird, zyklisch in Echtzeit übertragen werden. Derartige Provider und Consumer sind sowohl in einer E/A-Steuereinrichtung als auch in E/A-Feldgeräten implementiert. Der zyklische Datenaustausch zwischen einer E/A-Steuereinrichtung und einem dezentralen E/A-Feldgeräten erfolgt über eine Kommunikationsbeziehung, auch Communication Relätionship (CR) genannt, die zwischen einem Provider und einem Consumer aufgebaut wird. Eine Kommunikationsbeziehung von der Steuereinrichtung zu einem Feldgerät wird als Ausgabe-CR oder Output-CR, bezeichnet, während die Kommunikationsbeziehung von einem Feldgerät zu der Steuereinrichtung als Eingabe-CR oder Input-CR bezeichnet wird.

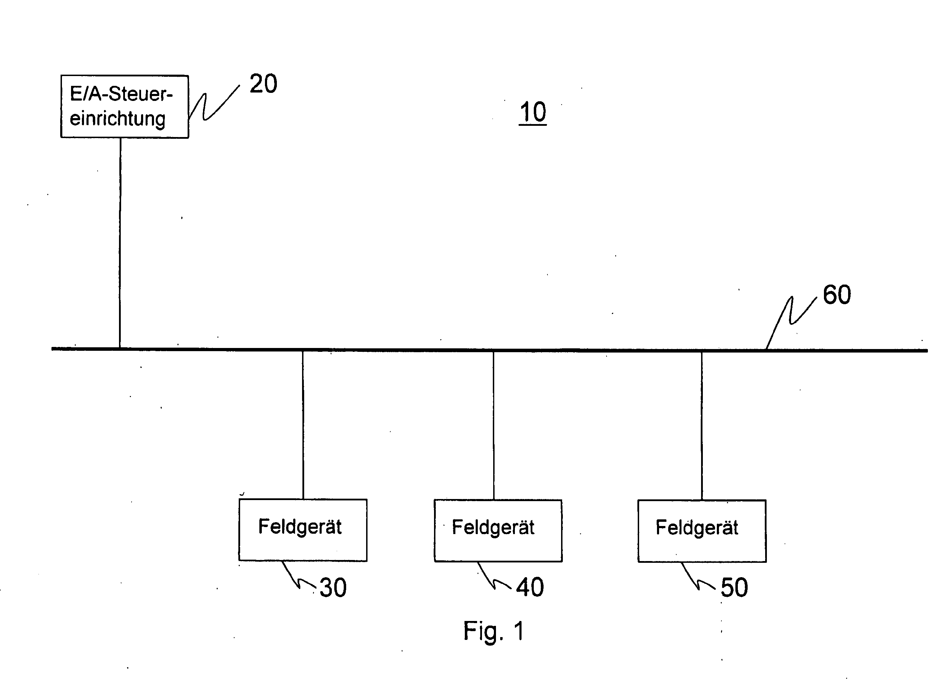

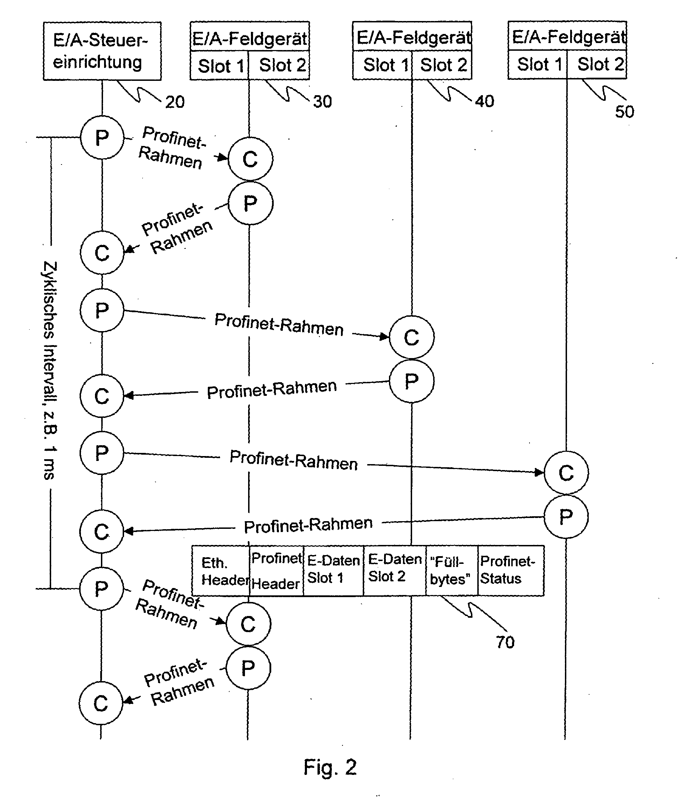

Die Funktionsweise eines bekannten, auf dem Profinet-IO-Standard basierten Kommunikationssystems ist in Fig. 2 schematisch erläutert. Fig. 2 zeigt das Zeitfolgediagramm eines Kommunikationszylus zwischen einer Steuereinrichtung 20 und beispielsweise drei Feldgeräten 30, 40 und 50 eines bekannten Kommunikationssystems, welches auf dem Profinet-IO-Standard basiert. Ein solches Kommunikationssystem ist in Fig. 1 schematisch dargestellt. Fig. 1 zeigt ein auf Ethernetbasis aufgebautes Kommunikationsnetz 60, an welches die E/A-Steuereinrichtung 20 sowie die drei E/A-Feldgeräte 30, 40 und 50 angeschlossen sind.

Wir kehren nunmehr zu Fig. 2 zurück. Wie in Fig. 2 dargestellt, muss die Steuereinrichtung 20 zu jedem Feldgerät eine separate Ausgabe-CR aufbauen, wenn sie Daten zu den Feldgeräten übertragen möchte. Hierzu wird in der Steuereinrichtung eine Provideranwendung P gestartet, während in dem jeweiligen Feldgerät eine Consumeranwendung C gestartet wird. In gleicher Weise muss zwischen jedem Feldgerät, welches Daten zur Steuereinrichtung 20 übertragen möchte, und der Steuereinrichtung 20 eine eigene Eingabe-CR aufgebaut werden. Hierzu wird in jedem Feldgerät eine Provideranwendung P und in der Steuereinrichtung 20 für jedes Feldgerät eine Consumeranwendung C gestartet. Diese Beziehungen sind in Fig. 2 schematisch dargestellt. Gemäß dem dargestellten Zeitfolgediagramm wird zunächst eine Ausgabe-Beziehung zwischen der Steuereinrichtung 20 und dem Feldgerät 30 hergestellt. Anschließend wird eine Eingabe-Beziehung zwischen dem Feldgerät 30 und der Steuereinrichtung 20 hergestellt. Zeitlich aufeinanderfolgend werden dann in ähnlicher Weise Ausgabe-und Eingabe-Beziehungen zwischen der Steuereinrichtung 20 und den Feldgeräten 40 und 50 aufgebaut.

Für jede Ausgabe-CR wird in der Datensicherungsschicht der Steuereinrichtung , die der Schicht 2 des OSI-Modells entspricht, ein Ethernet-Paket erzeugt, in den der Profinet-Rahmen, der die zu übertragenden Daten enthält, eingebettet und zum jeweiligen Feldgerät übertragen wird. In ähnlicher Weise erzeugt jedes Feldgerät, welches in einer Eingabe-CR Daten zur Steuereinrichtung übertragen will, ein Ethernet-Paket, in welches wiederum ein Profinet-Rahmen eingebettet wird. In Fig. 2 ist ein beispielhaftes Ethernet-Paket 90, in welchem ein Profinet-Rahmen eingebettet ist, für eine Eingabe-CR vom Feldgerät 50 zur Steuereinrichtung 20 dargestellt. Das Ethernet-Paket 90 weist in an sich bekannter weise einen Ethernet-Header auf, dem ein Profinet-Header folgt. Daran schließen sich die vom Feldgerät 50 zu übertragenden Eingabedaten (E-Daten Schlitz 1; E-Daten Schlitz 2), welche in Schlitze 1 und 2 unterteilt sind, an. Angemerkt sei, dass in den beschriebenen Ausführungsvarianten lediglich der einfachen Darstellung wegen die in den Feldgeräten gespeicherten Daten in zwei Schlitzen enthalten sind. Die minimale Länge eines Ethernet-Pakets beträgt 72 Byte, wovon 8 Bytes auf die Präambel fallen. Bei einer solchen Paketgröße lässt Profinet eine Übertragung von 44 Byte Nutzdaten in einem Ethernet-Paket zu. Falls die beispielsweise vom Feldgerät 50 zu übertragenden Daten eine kleinere Länge besitzen, beispielsweise lediglich 4 Bytes, wird der Rest des Ethernet-Pakets mit entsprechenden Füll-Bytes besetzt, wie dies in Fig. 2 dargestellt ist. Die Übertragung von separaten Ethernet-Paketen zwischen der Steuereinrichtung und den Feldgeräten führt insbesondere bei Automatisierungskomponenten mit einer kleinen Nutzdatenlänge zu ungünstigen Übertragungsverhalten. Zum einen ist wegen des kleinen Nutzdaten-zu-Fülldaten-Verhältnisses die Übertragungrate niedrig. Zum anderen ergeben sich entsprechend hohe Zykluszeiten. Zudem kann bei gegebener Zykluszeit nur eine geringe Anzahl von möglichen Teilnehmern aktiv sein, da die Bandbreite des Übertragungsmediums beispielsweise auf 100 Mbit/s begrenzt ist. Die wird beispielhaft auch in der Patentanmeldung US-A1-2006/161705 gezeigt.

Der Erfindung liegt daher die Aufgabe zugrunde, ein Verfahren sowie eine Steuer- und Datenübertragungsanlage zur Verfügung zu stellen, mit der eine effizientere Datenübertragung zwischen einer Steuereinrichtung und Feldgeräten bei gleichzeitiger Kompatibilität zum Profinet-Standard erreicht werden kann.

Ein Kerngedanke der Erfindung ist darin zu sehen, dass die von einer Steuereinrichtung zu einer Vielzahl von Feldgeräten zu übertragenden Daten in einem einzigen in Datenfelder unterteilten Rahmen und die von einer Vielzahl von Feldgeräten zu einer Steuereinrichtung zu übertragenden Daten ebenfalls in nur einem gemeinsamen in Datenfeldern unterteilten Rahmen übertragen werden können. Auf diese Weise kann die Übertragungsrate gegenüber der mit Standard-Profinet-Rahmen erzielten Übertragungsrate gesteigert werden, da unter anderem die Anzahl von zu übertragenden Füllbits reduziert werden kann.

Das oben genannte technische Problem wird zum einen durch die Verfahrensschritte des Anspruchs 1 gelöst.

Danach ist ein Verfahren zur optimierten Übertragung von Daten zwischen einer Steuereinrichtung und mehreren Feldgeräten vorgesehen. Die Feldgeräte und die Steuereinrichtung sind über ein IP-basiertes Kommunikationsnetz miteinander verbunden, wobei die Datenübertragung durch ein Profinet-Protokoll gesteuert wird.

Um Daten in einer Ausgabephase von der Steuereinrichtung zu einer Mehrzahl von N Feldgeräten übertragen zu können, wird ein einziger Rahmen gemäß dem Profinet-Protokoll erzeugt (Schritt a). Dieser an sich bekannte Profinet-Rahmen wird in N Datenfelder unterteilt, die den N Feldgeräten, zu denen Daten zu übertragen sind, in vorbestimmter Weise zugeordnet werden (Schritt b). Die Zuordnung von Datenfeldern zu den jeweiligen Feldgeräten kann während der Projektierungsphase erfolgen. Nunmehr werden in jedes Datenfeld des unterteilten Profinet-Rahmens Daten für das Feldgerät, welches dem jeweiligen Datenfeld zugeordnet ist, eingeschrieben, sofern die Steuereinrichtung Daten zur Übertragung zu diesem Feldgerät vorliegen hat (Schritt c). Sind alle bereitliegenden Daten in die Datenfelder des Profinet-Rahmens eingeschrieben, so wird der unterteilte Profinet-Rahmen über das Kommunikationsnetz zu jedem der N Feldgeräte geleitet (Schritt d). Beispielsweise wird hierzu der unterteilte Profinet-Rahmen in ein Ethernet-Paket eingebettet, welches in der Datensicherungsschicht der Steuereinrichtung erzeugt werden kann. Der unterteilte Profinet-Rahmen durchläuft jedes der N Feldgeräte, wobei jedes Feldgerät Daten aus dem Datenfeld, welches dem jeweiligen Feldgerät zugeordnet ist, ausliest (Schritt e).

Alternativ oder ergänzend umfasst das Verfahren auch die optimierte Übertragung von Daten während einer Eingabephase, das heißt während einer Übertragung von Daten von den Feldgeräten zur Steuereinrichtung. Hierzu wird wiederum ein einziger Rahmen gemäß dem Profinet-Protokoll zur Übertragung von Daten der N Feldgeräte zur Steuereinrichtung erzeugt (Schritt f). Der Profinet-Rahmen wird in N Datenfelder unterteilt, die den N Feldgeräten in vorbestimmter Weise zugeordnet werden (Schritt g). Der unterteilte Profinet-Rahmen wird einem der N Feldgeräte übergeben (Schritt h).

An dieser Stelle sei angemerkt, dass das Erzeugen des Profinet-Rahmens und das Unterteilen des Profinet-Rahmens in Datenfelder in einem vorbestimmten Feldgerät der N Feldgeräte oder in einer separaten Einrichtung erfolgen kann. Wird der Profinet-Rahmen in einem der N Feldgeräte erzeugt und in Datenfelder unterteilt, so bedeutet der Schritt des Übergebens des Profinet-Rahmens einem der N Feldgeräte, dass der Profinet-Rahmen einer bestimmten Schicht des Feldgerätes übergeben wird, in welcher Daten des Feldgerätes in das diesem Feldgerät zugewiesenen Datenfeld des unterteilten Profinet-Rahmens geschrieben werden. Wird der Profinet-Rahmen in einer separaten Verarbeitungseinrichtung erzeugt und in Datenfelder unterteilt, bedeutet der Verfahrensschritt des Übergebens des Profinet-Rahmens an eines der N Feldgeräte, dass der unterteilte Profinet-Rahmen von der Verarbeitungseinrichtung zu diesem einen Feldgerät übertragen wird. Die Verarbeitungseinrichtung kann auch Bestandteil dieses Feldgerätes sein. Der unterteilte Profinet-Rahmen wird nacheinander an alle N Feldgeräte weitergeleitet, die bei Empfang des unterteilten Profinet-Rahmens Daten in das dem jeweiligen Feldgerät zugeordneten Datenfeld einschreiben (Schritt i).

Dieses Verfahren sorgt dafür, dass Daten mit einer höheren Geschwindigkeit als beim Standard-Profinet übertragen werden können, da nur eine reduzierte Anzahl an Füllbytes, und im besten Fall sogar überhaupt keine Füllbytes mit den Nutzdaten übertragen werden müssen.

Vorteilhafte Weiterbildungen sind Gegenstand der Unteransprüche.

Die Datenübertragung kann dadurch weiter optimiert werden, dass in Abhängigkeit von der zu übertragenden Datenmenge zu den N Feldgeräten und/oder von den N Feldgeräten entschieden wird, ob die Daten von den N Feldgeräten und/oder zu den N Feldgeräten in einem einzigen unterteilten Profinet-Rahmen übertragen werden, oder ob die Daten von und/oder zu wenigstens einem der N Feldgeräte jeweils in einem separaten herkömmlichen Profinet-Rahmen übertragen werden. Demzufolge kann das Verfahren dafür sorgen, dass zu übertragende Daten zu und/oder von einem Feldgerät dann in einem separaten herkömmlichen Profinet-Rahmen übertragen werden, wenn die Datenmenge im Wesentlichen der Länge des Nutzdatenfeldes des herkömmlichen Profinet-Rahmens entspricht, so dass keine oder nur wenige Füllbytes übertragen werden müssten.

Für den Fall, dass die Daten von und/oder zu den Feldgeräten nicht in einem einzigen unterteilten Profinet-Rahmen übertragen werden können, werden die Schritte a) bis e) und/oder f) bis j) des Verfahrens 1 zyklisch solange wiederholt, bis alle Daten vollständig, insbesondere in Echtzeit zu den Feldgeräten beziehungsweise zu der Steuereinrichtung übertragen worden sind.

Gemäß einer besonderen Ausführungsform werden die Verfahrensschritte a) bis d), die zu einer Ausgabephase gehören, von der Steuereinrichtung selbst ausgeführt.

Alternativ können die Verfahrensschritte a) bis d) auch von einer der Steuereinrichtung zugeordneten Optimierungseinrichtung ausgeführt werden, die nachfolgend auch als Kopfstation bezeichnet wird. Bevor jedoch ein Profinet-Rahmen erzeugt wird, erzeugt die Steuereinrichtung für jedes der N Feldgeräte, zu denen Daten übertragen werden, einen separaten herkömmlichen Profinet-Rahmen. In jeden Profinet-Rahmen werden die Daten eingeschrieben, die zu dem jeweiligen Feldgerät übertragen werden sollen. Anschließend überträgt die Steuereinrichtung vorzugsweise nacheinander die Profinet-Rahmen unter Verwendung der Zieladresse des jeweiligen Feldgerätes zur Optimierungseinrichtung. In der Optimierungseinrichtung werden die Zieladressen durch eine Multicast-Adresse ersetzt, die in den unterteilten Profinet-Rahmen eingeschrieben wird. Anschließend werden die Verfahrensschritte c) und d) von der Optimierungseinrichtung ausgeführt.

Die Verwendung einer Optimierungseinrichtung hat den Vorteil, dass bei der Durchführung des erfindungsgemäßen Verfahrens auch herkömmliche Steuereinrichtungen eingesetzt werden können. -

Während der Eingabephase empfängt die Optimierungseinrichtung einen unterteilten Profinet-Rahmen, welcher für die Steuereinrichtung bestimmt ist. Die Daten jedes Datenfeld des unterteilten Profinet-Rahmens werden dann in einen separaten Profinet-Rahmen geschrieben. Jeder Profinet-Rahmen enthält nunmehr Daten eines bestimmten Feldgerätes. Unter Verwendung der Quellenadresse des jeweiligen Feldgerätes wird nunmehr jeder Profinet-Rahmen in einem eigenen Ethernet-Packet zur Steuereinrichtung übertragen. Anhand der Quellenadresse erkennt die Steuereinrichtung, von welchem Feldgerät die Daten in dem jeweiligen Profinet-Rahmen stammen.

Das oben genannte technische Problem wird ebenfalls durch eine Steuer- und Datenübertragungsanlage zur optimierten Übertragung von Daten zwischen einer Steuereinrichtung und mehreren Feldgeräten gelöst. Die Steuereinrichtung und eine Vielzahl von N Feldgeräten sind mit einem IP-basierten Kommunikationsnetz verbunden, wobei als Kommunikationsprotokoll ein Profinet-Protokoll verwendet wird. Der Steuereinrichtung ist eine Einrichtung zur Optimierung der Datenübertragung zugeordnet. Die Optimierungseinrichtung weist eine Einrichtung zum Erzeugen eines einzigen Rahmens gemäß einem Profinet-Protokoll zur Übertragung von Daten zu den N Feldgeräten auf. Weiterhin weist die Optimierungseinrichtung eine Einrichtung zum Unterteilen des Profinet-Rahmens in N Datenfelder und zum Zuordnen der N Datenfelder zu den N Feldgeräten in vorbestimmter Weise auf. Ferner ist eine Einrichtung zum gezielten Einschreiben von Daten in die Datenfelder des unterteilten Profinet-Rahmens sowie eine Einrichtung zum Übertragen des unterteilten Profinet-Rahmens zu jedem der N Feldgeräte vorgesehen. Jedes Feldgerät ist zum Auslesen der für ihn bestimmten Daten aus dem ihm zugeordneten Datenfeld des unterteilten Profinet-Rahmens.ausgebildet.

Bei einer bevorzugten Ausführungsform ist die Optimierungseinrichtung in der Steuereinrichtung implementiert.

Bei einer alternativen Ausführungsform ist die Optimierungseinrichtung in einem der N Feldgeräte implementiert oder als eine separate Einrichtung ausgebildet, die mit dem Kommunikationsnetz verbunden ist. Die Optimierungseinrichtung weist in diesem Fall eine erste Einrichtung zum Empfangen von herkömmlichen Profinet-Rahmen von der Steuereinrichtung, die jeweils für eines der N Feldgeräte bestimmt sind, auf. Ferner ist eine Einrichtung zum Auslesen der Daten aus den empfangenen Profinet-Rahmen vorgesehen, wobei die Einschreibeeinrichtung zum Einschreibender ausgelesenen Daten in die Datenfelder des Profinet-Rahmens, welche den jeweiligen Feldgeräten zugeordnet sind, ausgebildet ist. Weiterhin ist eine zweite Einrichtung zum Empfangen eines für die Steuereinrichtung bestimmten unterteilten Profinet-Rahmens vorgesehen. Zudem kann eine Einrichtung zum Einschreiben der Daten jedes Datenfeldes des unterteilten Profinet-Rahmens in einen separaten herkömmlichen Profinet-Rahmen sowie eine Einrichtung zum Übertragen der herkömmlichen Profinet-Rahmen unter Verwendung der Quellenadresse des jeweiligen Feldgerätes zur Steuereinrichtung vorgesehen sein.

Um Daten von den Feldgeräten zur Steuereinrichtung zu übertragen, weist wenigstens eines der N Feldgeräte eine Einrichtung zum Erzeugen eines Rahmens gemäß einem Profinet-Protokoll sowie eine Einrichtung zum Unterteilen des Profinet-Rahmens in N Datenfelder auf. Jedes der N Feldgeräte ist dann zum Einschreiben von Daten in das Datenfeld des unterteilten Profinet-Rahmens, welches dem jeweiligen Feldgerät zugeordnet ist, ausgebildet.

Damit der von der Optimierungseinrichtung dem Kommunikationsnetz übergebene unterteilte Profinet-Rahmen auch von jedem der N Feldgeräte empfangen werden kann, weist die Optimierungseinrichtung eine Einrichtung auf, die eine Multicast-Adresse in ein IP-Paket, welches den unterteilten Profinet-Rahmen zu den N Feldgeräten überträgt, schreiben kann. In diesem Fall kennt jedes der N Feldgeräte sowohl seine eigene Quellenadresse als auch die Multicast-Adresse, welche eine Übertragung des unterteilten Profinet-Rahmens zu der Gruppe von Feldgeräten ermöglicht.

Um die Effizienz der Steuer- und Datenübertragungsanlage hinsichtlich der Übertragungsgeschwindigkeit weiter optimieren zu können, weist die Optimierungseinrichtung eine Entscheidungseinrichtung auf, die in Abhängigkeit von der zu übertragenden Datenmenge zu den N Feldgeräten und/oder von den N Feldgeräten entscheiden kann, ob die Daten von den N Feldgeräten und/oder zu den N Feldgeräten jeweils in einem einzigen unterteilten Profinet-Rahmen übertragen werden, oder ob die Daten von und/oder zu wenigstens einem der N Feldgeräte jeweils in einem separaten herkömmlichen Profinet-Rahmen zu beziehungsweise von der Steuereinrichtung übertragen werden.

Bei dem IP-basierten Kommunikationsnetz handelt es sich vorzugsweise um ein Ethernet, insbesondere um ein Fast-Ethernet.

Das Verfahren sowie die Steuer- und Datenübertragungsanlage können alle Konfigurationsmechanismen von Profinet, wie zum Beispiel das Kontext-Management, unterstützen. Zum anderen können auch Standard-Profinet-Feldgeräte mit Feldgeräten, die den optimierten Übertragungsdienst in Echtzeit unterstützen, betrieben werden. Dank der Übertragung von Daten zu mehreren Feldgeräten und von mehreren Feldgeräten in einem einzigen, in Datenfeldern unterteilten Profinet-Rahmen genügt es, beispielsweise den Zykluszähler nur ein einziges Mal zu übertragen, wodurch die Datenübertragung weiter optimiert werden kann.

Die Erfindung wird nachfolgend anhand eines Ausführungsbeispiels in Verbindung mit den beiliegenden Zeichnungen näher erläutert.

Es zeigen:
- Fig. 1: eine Steuer- und Datenübertragungsanlage, in der die Erfindung verwirklicht ist,
- Fig. 2: ein Zeitfolgediagramm eines Datenübertragungszyklus zwischen einer Steuereinrichtung und mehreren Feldgeräten gemäß dem Standard-Profinet,
- Fig. 3: ein Zeitfolgediagramm zur Übertragung von Daten zwischen einer Steuereinrichtung und mehreren Feldgeräten mittels eines einzigen Profinet- Summenrahmens gemäß der Erfindung,
- Fig. 4: das Zeitfolgediagramm einer Datenübertragung ähnlich der Fig. 3, wobei eine Kopfstation zum Bereitstellen des Profinet-Summenrahmens verwendet wird,
- Fig. 5: einen in einem Ethernet-Paket eingebetteten erfindungsgemäßen Profinet-Summenrahmen,
- Fig. 6: ein Blockschaltbild des Optimierungsmoduls, welches in der in Fig. 3 gezeigten Steuereinrichtung oder in der in Fig. 4 gezeigten Kopfstation implementiert sein kann, und
- Fig. 7: ein Blockschaltbild des in Fig. 1 gezeigten Feldgerätes, in dem die Erfindung verwirklicht ist.

Fig. 1 zeigt als Steuer- und Datenübertragungsanlage eine beispielhafte Automatisierungsanlage 10, bei der die E/A-Steuereinrichtung 20 und beispielsweise drei Feldgeräte 30, 40 und 50, welche als E/A-Geräte fungieren können, an einem Übertragungsmedium auf der Basis Ethernet-Technologie angeschlossen sind. Angemerkt sei, dass die in Fig. 1. dargestellte Automatisierungsanlage 10 derart ausgebildet ist, dass sie eine Datenübertragung sowohl gemäß dem Standard-Profinet-Protokoll als bei dem optimierten Echtzeit-Betrieb gemäß der vorliegenden Erfindung unterstützen kann.

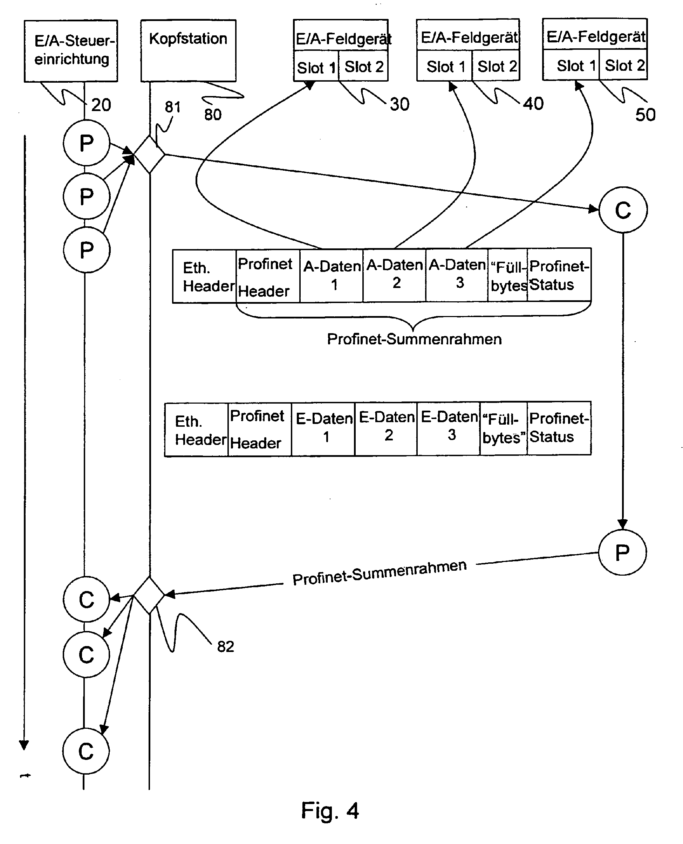

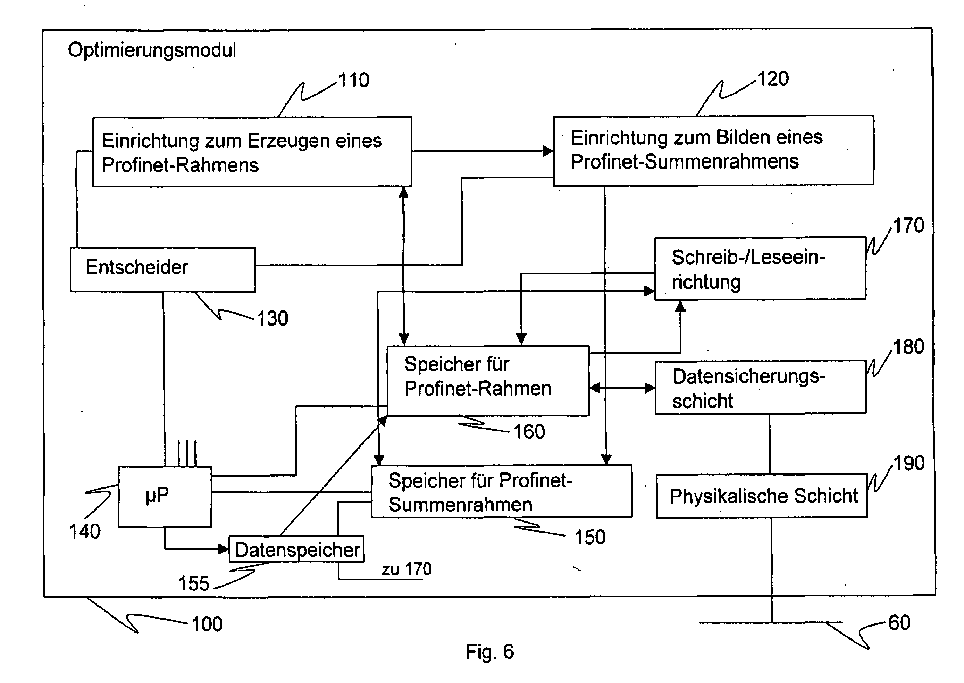

Fig. 6 zeigt ein beispielhaftes Optimierungsmodul 100 gemäß der Erfindung, welches sowohl in der Steuereinrichtung 20 als auch in.einer in Fig. 4 dargestellten Kopfstation implementiert sein kann. Um sowohl eine Datenübertragung auf Grundlage des Standard-Profinet-Protokolls als auch eine Datenübertragung mit einer effizienteren, das heißt höheren Übertragungsgeschwindigkeit zu unterstützen, weist das Optimierungsmodul eine Einrichtung 110 zum Erzeugen eines Profinet-Rahmens gemäß dem Standard-Profinet sowie eine weitere Erzeugungseinrichtung 120 auf, die zum Bilden eines Profinet-Summenrahmen ausgebildet ist.

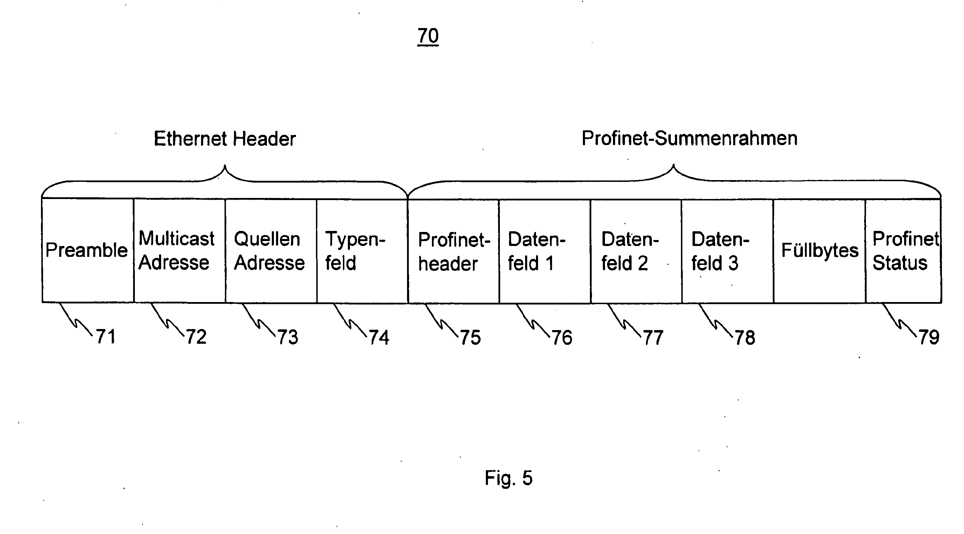

Die Erzeugungseinrichtung 120 dient dazu, den Profinet-Rahmen gemäß dem Standard-Profinet in eine Vielzahl von Datenfeldern zu unterteilen, in die Daten geschrieben werden können, die für die jeweiligen Feldgeräte bestimmt sind. Bei einer bevorzugten Ausführungsform wird der herkömmliche Profinet-Rahmen von der Erzeugungseinrichtung 110 in einen Profinet-Rahmen-Speicher 160 abgelegt. In ähnlicher Weise wird der in Datenfelder unterteilte Profinet-Rahmen, nachfolgend kurz Profinet-Summenrahmen genannt, von der Erzeugungseinrichtung 120 in einen Speicher für Profinet-Summenrahmen 150 abgelegt. Eine Schreib-/Leseeinrichtung 170 ist mit den beiden Speichern 160 und 150 verbunden, um Daten, die für die Feldgeräte bestimmt sind, entweder in einen herkömmlichen Profinet-Rahmen, der nur an ein einziges Feldgerät gerichtet ist, oder in den Profinet-Summenrahmen, der die Daten für eine Gruppe von Feldgeräten enthält, einzuschreiben. Ferner weist das Optimierungsmodul 100 eine Datensicherungsschicht 180 und eine physikalische Schicht 190 auf, die auf der Ethernet-Technologie basieren. Diese beiden Schichten entsprechen der zweiten beziehungsweise ersten Schicht des OSI-Schichtenmodells. Über die physikalische Schicht 190 ist das Optimierungsmodul 100 mit dem Ethernet 60 verbunden. Angemerkt sei an dieser Stelle, dass die Datensicherungsschicht 180 und die physikalische Schicht 190 an irgendeiner Stelle der Steuereinrichtung 20 oder, wenn das Optimierungsmodul in der Kopfstation 80 implementiert ist, an irgendeiner Stelle der Kopfstation 80 implementiert sein kann. Die Zuordnung dieser beiden Schichten zum Optimierungsmodul ist lediglich beispielhaft gewählt worden. Eine Steuerungseinrichtung oder ein Mikroprozessor 140 ist mit allen Komponenten des Optimierungsmoduls verbunden, um das Optimierungsmodul 100 überwachen und steuern zu können. Weiterhin ist der Mikroprozessor 140 mit einer Entscheidungseinrichtung 130 verbunden, die wiederum mit der Erzeugungseinrichtung 110 und der Erzeugungseinrichtung 120 verbunden ist. Die Entscheidungseinrichtung 130 ist in der Lage, anhand der zu übertragenden Datenmenge zu den Feldgeräten und/oder von den Feldgeräten zur Steuereinrichtung 20 zu entscheiden, ob die Daten in einzelnen herkömmlichen Profinet-Rahmen zu jedem einzelnen Feldgerät oder von den Feldgeräten zur Steuereinrichtung 20 und/oder in einem gemeinsamen einzigen Profinet-Summenrahmen zu der Gruppe von Feldgeräten oder von der Gruppe von Feldgeräten zur Steuereinrichtung übertragen werden sollen. Der herkömmliche Profinet-Rahmen und auch der Profinet-Summenrahmen werden zur Datenübertragung der Datensicherungsschicht 180 übergeben, die den jeweiligen Rahmen in ein Ethernet-Paket einbettet. Ein einen Profinet-Summenrahmen enthaltendes Ethernet-Paket 70 ist in Fig. 5 beispielhaft dargestellt. Lediglich beispielhaft sei angenommen, dass das Ethernet-Paket eine Mindestlänge von 72 Bytes enthält. In herkömmlicher Weise umfasst das Ethernet-Paket eine Präambel 71, ein Zieladressenfeld 72, ein Quellenadressenfeld 73, ein Typenfeld 74 und ein Datenfeld, in welchem nunmehr der Profinet-Summenrahmen untergebracht ist. Im vorliegenden Beispiel umfasst der Profinet-Summenrahmen ein Feld für den Profinet-Header 75, ein erstes Datenfeld 76, welches dem Feldgerät 30 zugeordnet ist, ein zweites Datenfeld 76, welches dem Feldgerät 40 zugeordnet ist, und ein drittes Datenfeld 78, welches dem Feldgerät 50 zugeordnet ist. Für den Fall, dass die Anzahl zu übertragenden Daten in den Datenfeldern kleiner ist als die vom Ethernet-Paket zur Verfügung gestellte Nutzdatenlänge, werden Füllbytes in ein entsprechendes Feld gestopft. Am Ende des Profinet-Summenrahmens ist ein Profinet-Statusfeld 79 vorgesehen. Die Information in dem Profinet-Statusfeld 79 zeigt beispielsweise an, ob im Ethernet-Paket 70 ein herkömmlicher Profinet-Rahmen oder ein Profinet-Summenrahmen übertragen wird.

An dieser Stelle sei erwähnt, dass für den Fall, dass in dem Ethernet-Paket 70 ein Profinet-Summenrahmen übertragen wird, in dem Adressenfeld 72 eine Multicast-Adresse geschrieben ist, die den drei Feldgeräten 30, 40 und 50 bekannt ist. Wird hingegen ein herkömmlicher Profinet-Rahmen in dem Ethernet-Paket 70 übertragen, steht in dem Adressenfeld 72 die Zieladresse des jeweiligen Empfängers, welches die Steuereinrichtung 20 oder eines der Feldgeräte 30, 40 oder 50 sein kann. Wird ein Profinet-Summenrahmen von der Steuereinrichtung zu den Feldgeräten 30, 40 und 50 übertragen, so steht in dem Quellenadressfeld 73 die Adresse der Steuereinrichtung 20. Wird hingegen ein Profinet-Summenrahmen von den Feldgeräten 30, 40 und 50 zur Steuereinrichtung 20 übertragen, so kann das Quellenadressfeld 73 leer sein. Statt dessen kann in dem Adressenfeld 72 die Multicast-Adresse und im Profinet-Statusfeld eine Angabe darüber enthalten sein, dass nunmehr ein Profinet-Summenrahmen übertragen wird. Anhand diese Angaben ist das Optimierungsmodul 100, welches der Kopfstation 80 oder der Steuereinrichtung 20 zugeordnet ist, in der Lage, zu erkennen, dass Daten von einer Gruppe von Feldgeräten, das sind im vorliegenden Beispiel die Feldgeräte 30, 40 und 50, empfangen worden sind. Zudem sind sowohl dem Optimierungsmodul 100 als auch den Feldgeräten 30, 40 und 50 bekannt, welches Datenfeld in dem Profinet-Summenrahmen welchem Feldgerät zugeordnet ist.

Wie bereits erwähnt, können in der Automatisierungsanlage 10 herkömmliche Profinet-Feldgeräte eingesetzt werden, die lediglich herkömmliche Profinet-Rahmen empfangen und senden können. Darüber hinaus können Feldgeräte angeschlossen sein, die nur Profinet-Summenrahmen empfangen und übertragen können. Zudem können Feldgeräte am Kommunikationsnetz 60 angeschlossen sein, die sowohl herkömmliche Profinet-Rahmen als auch Profinet-Summenrahmen verarbeiten können.

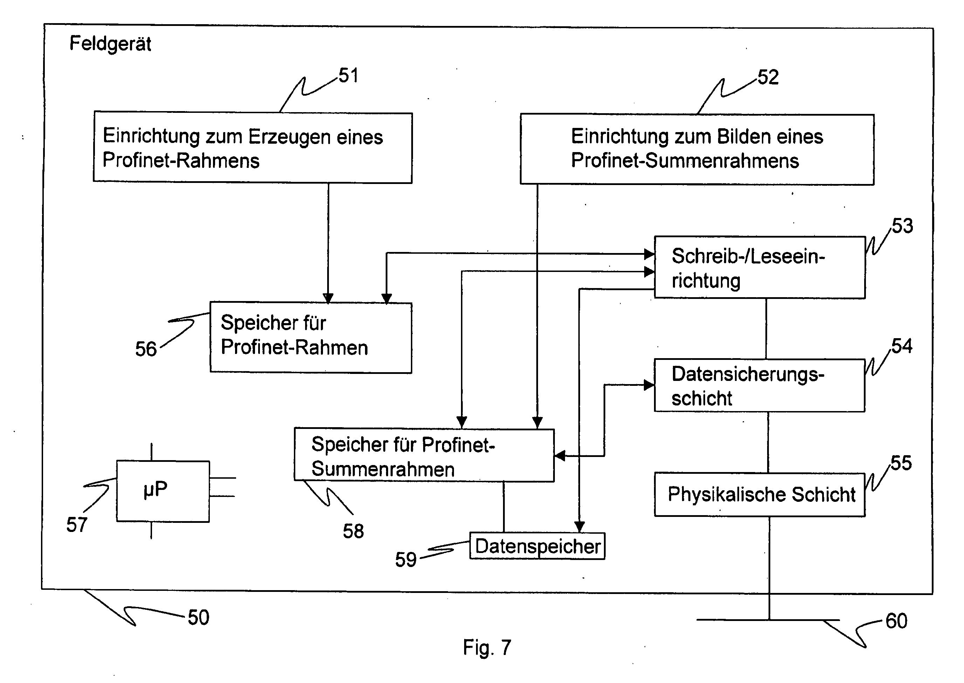

Im vorliegenden Beispiel sei angenommen, dass zwar alle Feldgeräte sowohl herkömmliche Profinet-Rahmen als auch Profinet-Summenrahmen empfangen und weiterleiten können; jedoch ist lediglich das Feldgerät 50 in der Lage, einen Profinet-Summenrahmen zu erzeugen, um während einer Eingabephase Daten zur Steuereinrichtung 20 übertragen zu können. Das Feldgerät 50 ist in Fig. 7 detaillierter dargestellt. Sowohl eine Erzeugungseinrichtung 51 zum Erzeugen eines herkömmlichen Profinet-Rahmens als auch eine Erzeugungseinrichtung 52 zum Erzeugen eines Profinet-Summenrahmens ist im Feldgerät 50 vorgesehen. An dieser Stelle sei angemerkt, dass sowohl die in Fig. 6 gezeigten Erzeugungseinrichtungen 110 und 120 als auch die in Fig. 7 dargestellten Erzeugungseinrichtungen 51 und 52 jeweils eine einzige Baugruppe darstellen können, wobei in diesem Fall die Erzeugungseinrichtung zum Erzeugen eines Profinet-Summenrahmens zunächst einen herkömmlichen Profinet-Rahmen erzeugt und diesen dann in eine entsprechende Anzahl von Datenfeldern unterteilt. Ähnlich dem in Fig. 6 dargestellten Optimierungsmodul ist der Erzeugungseinrichtung 51 ein Speicher 56 zum Speichern herkömmlicher Profinet-Rahmen und der Erzeugungseinrichtung 52 ein Speicher 58 zum Speichern von Profinet-Summenrahmen zugeordnet. Eine Schreib-/Leseeinrichtung 53 dient dem Einschreiben von Daten in den oder in die die im Speicher 56 abgelegten Profinet-Rahmen und/oder zum Einschreiben in oder zum Auslesen von Daten des im Speicher 58 abgelegten Profinet-Summenrahmens. Zum Empfangen und Übertragen von Daten weist das Feldgerät wiederum eine Datensicherungsschicht 54 und eine physikalische Schicht 55 auf, die gemäß dem Ethernet-Standard aufgebaut sind. Über die physikalische Schicht 55 ist das Feldgerät 50 mit dem Ethernet 60 verbunden. Die Komponenten des Feldgerätes 50 werden durch einen Mikroprozessor oder eine speicherprogrammierbare Steuerung 57 gesteuert und überwacht, welche zusammen mit ihren Anschlüssen nur schematisch dargestellt ist.

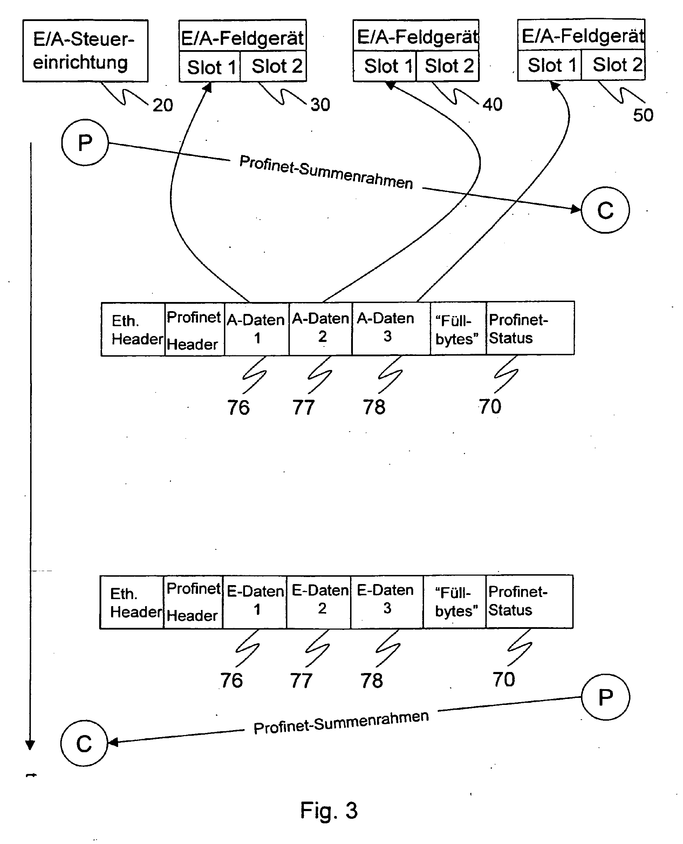

Die Funktionsweise der in Fig. 1 dargestellten Automatisierungsanlage 10 zur Übertragung von Daten in Profinet-Summenrahmen wird nunmehr anhand zweier Ausführungsbeispiele in Verbindung mit den Figuren 3 und 4 näher erläutert.

Fig. 3 zeigt schematisch die an das Ethernet 60 angeschalteten Feldgeräte 30, 40 und 50 sowie die angeschaltete Steuereinrichtung 20. Darüber hinaus ist ein Zeitfolgediagramm darstellt, welches die Übertragung eines Profinet-Summenrahmens von der Steuereinrichtung 20 zu den Feldgeräten 30, 40 und 50 und die Übertragung eines Profinet-Summenrahmens von den Feldgeräte 50, 40 und 30 zur Steuereinrichtung 20 dargestellt. Die Übertragungszeit nimmt in Pfeilrichtung der vertikal eingezeichneten Zeitachse zu.

Zunächst wird in der Steuereinrichtung 20, in der im vorliegenden Beispiel das Optimierungsmodul 100 implementiert ist, eine Anwendungsbeziehung, auch Application Relation (AR) genannt, aufgebaut, über die eine Ausgabebeziehung ausgeführt werden soll. Hierzu wird in der Steuereinrichtung 20 eine Provider-Anwendung P und im Feldgerät 50 eine Consumer-Anwendung C gestartet. Nunmehr sorgt die Provider-Anwendung P der Steuereinrichtung 20 dafür, dass der Mikroprozessor 140 die Erzeugungseinrichtung 120 veranlasst, einen Profinet-Summenrahmen mit den Datenfeldern 76, 77 und 78 gemäß Fig. 5 zu erzeugen. Ferner wird in dem Profinet-Statusfeld 79 des in Fig. 5 gezeigten Ethernet-Packets beispielsweise ein oder mehrere Bits gesetzt, die auf die Übertragung eines Profinet-Summenrahmens hinweisen. Der Profinet-Summenrahmen wird von der Erzeugungseinrichtung 120 dann in den Speicher 150 gelegt. Unter Steuerung des Mikroprozessors 140 schreibt die Leseeinrichtung 170 die in einem Datenspeicher 155 zur Verfügung stehenden Daten der Feldgeräte 30, 40 und 50 in das Datenfelder 76, 77 beziehungsweise 78. Anschließend wird der beschriebene Profinet-Summenrahmen vom Speicher 150 der Datensicherungsschicht 180 übergeben, die den Profinet-Summenrahmen in ein Ethernet-Paket schreibt. Gleichzeitig wird in das Adressenfeld 72 des in Fig. 5 gezeigten Pakets die Multicast-Adresse eingeschrieben, die den drei Feldgeräten 30, 40 und 50 ebenfalls bekannt ist. Angenommen sei an dieser Stelle, dass lediglich ein einziges Füllbyte in dem Profinet-Summenrahmen übertragen werden muss. Das ebenfalls in Fig. 3 schematisch gezeigte Ethernet-Paket 70 wird nunmehr über die physikalische Schicht 190 und das Ethernet 60 zunächst zum Feldgerät 30, von diesem dann zum Feldgerät 40 und von diesem schließlich zum Feldgerät 50 weitergeleitet. Das Feldgerät 30 erkennt anhand der Multicast-Adresse des empfangenen Ethernet-Pakets 70, dass dieses Paket unter anderem für ihn bestimmt ist. Zudem ist das Feldgerät 30 bereits darüber informiert worden, dass die für ihn bestimmten Daten im Datenfeld 76 übertragen werden. Das Feldgerät 30 liest oder kopiert die für ihn bestimmten

Daten aus dem Datenfeld 76 aus und speichert diese Daten zum Beispiel im Speicher 59 ab. Die Daten werden zum Beispiel in zwei Schlitzen, Slot 1 und Slot 2 in dem Speicher 59 abgelegt. Anschließend leitet das Feldgerät 30 das Ethernet-Paket 70 zum Feldgerät 40 weiter, welches wiederum an der Multicast-Adresse erkennt, dass dieses Paket für ihn bestimmt ist. Das Feldgerät 40 weiß, dass im Datenfeld 77 Daten für ihn übertragen worden sind und liest diese aus. Auch diese Daten werden wieder schlitzweise in einem Speicher abgelegt. Anschließend wird das Ethernet-Paket 70 weiter zum letzten Feldgerät 50 übertragen, welches nunmehr die im Datenfeld 78 enthaltenen Daten ausliest und schlitzweise speichert. Bei den Datenfeldern 76, 77 und 78 handelt es sich um vorprojektierte Stellen, die, wie bereits erwähnt, sowohl dem Optimierungsmodul 100 als auch den jeweiligen Feldgeräten 30, 40 und 50 bekannt sind.

Für den Fall, dass die Feldgeräte 30, 40 und 50 Daten zur Steuereinrichtung 20 übertragen wollen, wird eine Eingabeprozedur eingeleitet. Hierzu wird eine Provider-Anwendung im Feldgerät 50 und eine Consumer-Anwendung in der Steuereinrichtung 20 gestartet. Unter Steuerung des Mikroprozessors 57 wird nunmehr in der Erzeugungseinrichtung 52 des Feldgerätes ein Profinet-Summenrahmen erzeugt und im Speicher 58 abgelegt. Die Schreib-/Leseeinrichtung 53 greift auf den Datenspeicher 59 zu, in dem Daten schlitzweise abgelegt sind, die zur Steuereinrichtung 20 übertragen werden sollen. Unter Steuerung des Mikroprozessors 57 werden diese Daten in das Datenfeld 78 des erzeugten Profinet-Summenrahmens eingeschrieben, da dieses Datenfeld dem Feldgerät 50 zugeordnet worden ist.

Der Profinet-Summenrahmen wird vom Speicher 58 der Datensicherungsschicht 54 übergeben, die den Profinet-Summenrahmen nunmehr in ein Ethernet-Paket einbettet. In der Datensicherungsschicht 54 wird die Multicast-Adresse in das Adressenfeld 72 sowie ein entsprechender Hinweis in das Profinet-Statusfeld 79 geschrieben, der die Übertragung eines Profinet-Summenrahmens anzeigt. Über die physikalische Schicht 55 wird das Ethernet-Paket über das Ethernet 60 zunächst zum Feldgerät 40 übergeben. Das Feldgerät 40 erkennt anhand der Multicast-Adresse, dass ein Profinet-Summenrahmen zur Steuereinrichtung 20 übertragen werden soll. Daraufhin schreibt das Feldgerät 40, sofern vorhanden, seine für die Steuereinrichtung 20 bestimmten Daten in das Datenfeld 77, welches ihm zugeordnet ist, und leitet das Ethernet-Paket zum Feldgerät 30 weiter. Das Feldgerät 30 schreibt wiederum, sofern vorhanden, seine an die Steuereinrichtung 20 zu sendenden Daten in das Datenfeld 76 des Profinet-Summenrahmens, welches diesem Feldgerät zugeordnet ist und überträgt das Ethernet-Paket zur Steuereinrichtung 20. Angemerkt sei, dass das Feldgerät 30 im vorliegenden Beispiel lediglich ein einziges Füllbyte in den Profinet-Summenrahmen eingeschrieben hat, um die zu übertragenden Daten auf die gesamte Nutzdatenlänge des Profinet-Summenrahmens aufzufüllen. Die Consumer-Anwendung sorgt dafür, dass die Daten der Feldgeräte 30, 40 und 50 aus den entsprechenden Datenfeldern ausgelesen und weiter verarbeitet werden. Das entsprechende, zur Steuereinrichtung übertragene Ethernet-Paket ist schematisch ebenfalls in Fig. 3 dargestellt. Anzumerken sei in diesem Zusammenhang, dass der von der Steuereinrichtung zu den Feldgeräten übertragene Profinet-Summenrahmen Ausgabedaten (A-Daten) enthält, während der von den Feldgeräten zur Steuereinrichtung 20 übertragene Profinet-Summenrahmen Eingabedaten (E-Daten) enthält. Denkbar ist, dass der in Fig. 3 gezeigte Profinet-Summenrahmen nicht alle Daten für die Feldgeräte 30, 40 und 50 enthält, sondern jeweils nur einen ersten Teil der Daten, die jeweils im Slot 1 des jeweiligen Feldgerätes gespeichert werden. Demzufolge müsste der restliche Teil der Daten in einem zweiten Profinet-Summenrahmen von der Steuereinrichtung 20 zu den Feldgeräten 30, 40 und 50 übertragen werden. In ähnlicher Weise ist es denkbar, dass der untere in Fig. 3 gezeigte Profinet-Summenrahmen nur Eingabedaten für die Steuereinrichtung 20 überträgt, die jeweils in einem der beiden Schlitze - Slot1 oder Slot2 - der Feldgeräte 30, 40 und 50 gespeichert sind. In diesem Fall werden die restlichen Daten in einem weiteren Profinet-Summenrahmen von den Feldgeräten zur Steuereinrichtung 20 übertragen.

Fig. 4 zeigt eine weitere Ausführungsform zur Übertragung von Daten in einem Profinet-Summnenrahmen zwischen der Steuereinrichtung 20 und den Feldgeräten 30, 40 und 50. Im Unterschied zu der in Fig. 3 gezeigten Ausführungsform ist das in Fig. 6 dargestellte Optimierungsmodul 100 nunmehr in der Kopfstation 80 untergebracht, die im vorliegenden Beispiel ein separates Feldgerät ist, welche ebenfalls am Ethernet 60 angeschlossen ist. Allerdings könnte auch eines der Feldgeräte 30, 40 oder 50 die Kopfstation 80 bilden.

Ein Vorteil der in Fig. 4 gezeigten Ausführungsform kann darin gesehen werden, dass eine herkömmliche Steuereinrichtung gemäß dem Profinet-Standard verwendet werden kann. Sollen nunmehr Daten zu den Feldgeräten übertragen werden, baut die Steuereinrichtung 20 zunächst für jedes Feldgerät eine eigene Anwendungsbeziehung zur Kopfstation 80 auf. Anschließend erzeugt die Steuereinrichtung 20 für jedes Feldgerät einen eigenen herkömmlichen Profinet-Rahmen, der in einem Ethernet-Paket zur Kopfstation 80 übertragen wird, wie dies schematisch durch drei Verbindungen zwischen drei in der Steuereinrichtung 20 implementierten Provideranwendungen P und der Raute 81 in Fig. 4 dargestellt ist. Das Ethernet-Paket enthält die Quellenadresse der Steuereinrichtung 20 und die Zieladresse des jeweiligen Feldgerätes. Die Ethernet-Pakete, die den Feldgeräten 30, 40 und 50 zugeordnet sind, werden im Optimierungsmodul 100 der Kopfstation 80 zunächst in den Speicher 160 geschrieben. Das Optimierungsmodul 100 erzeugt nunmehr einen Profinet-Summenrahmen mit den Datenfeldern 76, 77 und 78. Der Mikroprozessor 140 des Optimierungsmoduls 180 steuert die Schreib-/Leseeinrichtung 170 an, die daraufhin die in den einzelnen Profinet-Rahmen enthaltenen Daten der jeweiligen Feldgeräte in den im Speicher 150 abgelegten Profinet-Summenrahmen derart einschreibt, dass die für das Feldgerät 30 bestimmten Daten in das Datenfeld 76 geschrieben werden, die für das Feldgerät 40 bestimmten Daten in das Datenfeld 77 geschrieben werden und die für das Feldgerät 50 bestimmten Daten in das Datenfeld 78 geschrieben werden. Zudem ersetzt das Optimierungsmodul 100 in der Datensicherungsschicht 180 die in den herkömmlichen Profinet-Rahmen enthaltenen Zieladressen der jeweiligen Feldgeräte durch die vereinbarte Multicast-Adresse. Im Quellenadressenfeld 77 kann die Adresse der Steuereinrichtung 20 oder der Kopfstation 80 enthalten sein. Die Kopfstation 80 überträgt das den Profinet-Summenrahmen enthaltene Ethernet-Paket über die physikalische Schicht 190 und das Kommunikationsnetz 60 zum Feldgerät 30, welches ähnlich dem in Verbindung mit Fig. 3 beschriebenen Verfahren das im zugeordnete Datenfeld 76 ausliest und anschließend das Ethernet-Pakets 70 an das Feldgerät 40 weiterleitet. Das Feldgerät 40 liest wiederum die für ihn bestimmten Daten aus dem Datenfeld 77 aus und leitet das Ethernet-Paket über das Kommunikationsnetz 60 zum Feldgerät 50 weiter. Das Feldgerät 50 liest wiederum die für ihn bestimmten Daten aus dem Datenfeld 78 aus.

Angenommen sei nunmehr, dass Daten von den Feldgeräten zur Steuereinrichtung 20 übertragen werden sollen. Hierzu erzeugt zunächst das Feldgerät 50, ähnlich der in Verbindung mit Fig. 3 bereits erläuterten Prozedur, einen Profinet-Summenrahmen. Anschließend schreibt das Feldgerät 50 seine für die Steuereinrichtung 20 bestimmten Daten in das Datenfeld 78. In der Datensicherungsschicht 54 des Feldgerätes 50 wird der Profinet-Summenrahmen in ein Ethernet-Paket eingebettet und unter Verwendung der Multicast-Adresse zum Feldgerät 40 übertragen. Ähnlich den Erläuterungen zu Fig. 3 schreibt das Feldgerät 40 die für die Steuereinrichtung 20 bestimmten Daten in das Datenfeld 77 ein und leitet das Ethernet-Paket zum Feldgerät 30 weiter, welches wiederum die für die Steuereinrichtung 20 bestimmten Daten in das Datenfeld 76 des Profinet-Summenrahmens einschreibt. Anschließend überträgt das Feldgerät 30 das Ethernet-Paket zur Kopfstation 80 weiter, was durch die Raute 82 in Fig. 4 schematisch dargestellt ist.

Das Optimierungsmodul 100 der Kopfstation 80 entfernt in der Datensicherungsschicht 180 den Profinet-Summenrahmen aus dem empfangenen Ethernet-Paket und schreibt den Profinet-Summenrahmen in den Speicher 150. Unter Steuerung des Mikroprozessors 140 werden die in den Datenfeldern 76, 77 und 78 gespeicherten Daten jeweils in einen eigenen Profinet-Rahmen geschrieben, welche in der

Erzeugungsenrichtung 110 erzeugt und im Speicher 160 abgelegt werden. Die den drei Feldgeräten 30, 40 und 50 zugeordneten Profinet-Rahmen werden vom Speicher 160 der Datensicherungsschicht 180 übergeben, die jeden herkömmlichen Profinet-Rahmen in ein separates Ethernet-Paket einbettet. In einer bevorzugten Ausführungsform wird in der Datensicherungsschicht 54 in jedes Ethernet-Paket die Quellenadresse des jeweiligen Feldgerätes und als Zieladresse die Adresse der Steuereinrichtung 20 eingeschrieben. Anschließend überträgt das

Optimierungsmodul 100 der Kopfstation 80 jedes Ethernet-Paket, welches einem der Feldgeräte 30, 40 und 50 zugeordnet ist, über die physikalische Schicht 190 und das Ethernet 60 zur Steuereinrichtung 20. Diese Übertragung ist in Fig. 4 schematisch durch drei Kommunikationsbeziehungen zwischen der Raute 82 und den Consumer-Anwendungen C der Steuereinrichtung 20 dargestellt.

Damit ist der Kommunikationszyklus zur Übertragung von Daten von der Steuereinrichtung 20 zu den Feldgeräten 30, 40 und 50 sowie die Übertragung von Daten von den Feldgeräten 30, 40 und 50 zur Steuereinrichtung 20 abgeschlossen.

An dieser Stelle sei angemerkt, dass die Entscheidungseinrichtung 130 des Optimierungsmoduls 100 in der Lage ist, anhand der zu übertragenden Datenmenge zu einem oder mehreren der Feldgeräte 30, 40 und 50 und in umgekehrter Richtung von wenigstens einem der Feldgeräte zur Steuereinrichtung 20 zu erkennen, ob die jeweiligen Daten in herkömmlichen separaten Profinet-Rahmen oder in einem gemeinsamen Profinet-Summenrahmen zu übertragen sind. Erkennt beispielsweise die Entscheidungseinrichtung 130, dass die Steuereinrichtung 20 Daten zum Feldgerät 30 übertragen möchte, welche die Nutzdatenlänge eines herkömmlichen Profinet-Rahmen vollständig oder nahezu vollständig belegen, und dass beispielsweise Daten für Feldgeräte 40 und 50 vorliegen, die einen Profinet-Summenrahmen vollständig oder nahezu vollständig belegen würden, so veranlasst die Entscheidungseinrichtung 130, dass die Steuereinrichtung 20 Daten zum Feldgerät 30 in einem herkömmlichen Profinet-Rahmen, der in der Einrichtung 110 erzeugt worden ist, überträgt, während die Daten zu den Feldgeräten 40 und 50 in einem Profinet-Summenrahmen übertragen werden, wie dies anhand der Figuren 3 und 4 zuvor detailliert erläutert worden ist.

## Patentansprüche

1. Verfahren zur optimierten Übertragung von Daten zwischen einer Steuereinrichtung (20) und mehreren Feldgeräten (30, 40, 50), die über ein IP-basiertes Kommunikationsnetz 860) miteinander verbunden sind, wobei die Datenübertragung durch ein Profinet-Protokoll gesteuert wird, mit folgendem Schritt:
a) Erzeugen eines einzigen Datenrahmens gemäß dem Profinet-Protokoll zur Übertragung von Daten zu einer Mehrzahl von N Feldgeräten (30, 40, 50),;
**gekennzeichnet durch** die weiteren Schritte:
b) Unterteilen des Profinet-Datenrahmens in N Datenfelder, die den N Feldgeräten (30, 40, 50)in vorbestimmter Weise zugeordnet werden;
c) Einschreiben in jedes Datenfeld des Profinet-Datenrahmens Daten für das Feldgerät, welches dem jeweiligen Datenfeld zugeordnet ist, sofern für dieses Feldgerät Daten vorliegen;
d) Weiterleiten des unterteilten Profinet-Datenrahmens zu jedem der N Feldgeräte (30, 40, 50);
e) Auslesen der Daten aus jedem Datenfeld **durch** das Feldgerät, welches dem jeweiligen Datenfeld zugeordnet ist; und/oder mit folgenden Schritten:
f) Erzeugen eines einzigen Datenrahmens gemäß dem Profinet-Protokoll zur Übertragung von Daten der N Feldgeräte (30, 40, 50) zur Steuereinrichtung (20);
g) Unterteilen des Profinet-Datenrahmens in N Datenfelder, die den N Feldgeräte (30, 40, 50) in vorbestimmter Weise zugeordnet werden;
h) Übergeben des Profinet-Datenrahmens einem der N Feldgeräte (30, 40, 50);
i) bei Empfang des unterteilten Profinet-Datenrahmens an dem einen Feldgerät Einschreiben von Daten, sofern verfügbar, in das diesem Feldgerät zugewiesene Datenfeld des unterteilten Profinet-Datenrahmens;
j) Wiederholen der Schritte h) und i) bis der unterteilte Profinet-Datenrahmen alle N Feldgeräte(30, 40, 50) passiert hat.

2. Verfahren nach Anspruch 1,
**gekennzeichnet durch** folgende Schritte:
Entscheiden in Abhängigkeit von der zu übertragenden Datenmenge zu den N Feldgeräten und/oder von den N Feldgeräten, ob die Daten von den N Feldgeräten und/oder zu den N Feldgeräten in einem einzigen unterteilten Profinet-Datenrahmen übertragen werden,
oder ob die Daten von und/oder zu wenigstens einem der N Feldgeräte jeweils in einem separaten herkömmlichen Profinet-Datenrahmen übertragen werden.

3. Verfahren nach Anspruch 1 oder 2,
**dadurch gekennzeichnet, dass**
die Schritte a) bis e) und/oder f) bis j) zyklisch wiederholt werden, bis alle Daten vollständig, insbesondere in Echtzeit, übertragen worden sind.

4. Verfahren nach Anspruch 1, 2 oder 3,
**dadurch gekennzeichnet, dass**
die Schritte a) bis d) von der Steuereinrichtung ausgeführt werden.

5. Verfahren nach Anspruch 1, 2 oder 3,
**dadurch gekennzeichnet, dass**
die Schritte a) bis d) von einer der Steuereinrichtung (20) zugeordneten Optimierungseinrichtung (100) ausgeführt werden, wobei vor der Ausführung des Schritts a) folgende Schritte in der Steuereinrichtung ausgeführt wird:
Erzeugen eines Profinet-Datenrahmens für jedes der N Feldgeräte, zu denen Daten übertragen werden sollen;
Einschreiben der für ein Feldgerät bestimmten Daten in den jeweiligen Profinet-Datenrahmen;
Übertragen der Profinet-Datenrahmen unter Verwendung der Zieladresse des jeweiligen Feldgeräts zur Optimierungseinrichtung, wobei
in Schritt c) die Zieladresse jedes Feldgerätes durch eine Multicast-Adresse ersetzt wird.

6. Verfahren nach Anspruch 5,
**gekennzeichnet durch** folgende Schritte:
Empfangen eines unterteilten Profinet-Datenrahmens,
welcher für die Steuereinrichtung bestimmt ist, an der Optimierungseinrichtung (100);
Einschreiben der Daten jedes Datenfeldes des unterteilten Profinet-Datenrahmens in einen separaten Profinet-Datenrahmen und Übertragen jedes Profinet-Datenrahmens unter Verwendung der Quellenadresse des jeweiligen Feldgeräts zur Steuereinrichtung.

7. Steuer- und Datenübertragungsanlage (10) zur optimierten Übertragung von Daten zwischen einer Steuereinrichtung (20) und mehreren Feldgeräten (30, 40, 50), mit
einer Steuereinrichtung (20) und einer Mehrzahl von N Feldgeräten(30, 40, 50), die mit einem IP-basierten Kommunikationsnetz (60) miteinander verbunden sind, wobei als Kommunikationsprotokoll ein Profinet-Protokoll verwendet wird,
und einer der Steuereinrichtung (20) zugeordneten Einrichtung (100) zur Optimierung der Datenübertragung, welche folgendes Merkmal aufweist:
eine Einrichtung (110) zum Erzeugen eines einzigen Datenrahmens gemäß dem Profinet-Protokoll zur Übertragung von Daten zu den N Feldgeräten,
**dadurch gekennzeichnet, dass** die Steuereinrichtung (20) noch
folgende Merkmale aufweist:
eine Einrichtung (120) zum Unterteilen des Profinet-Datenrahmens in N Datenfelder und zum Zuordnen der N Datenfelder zu den N Feldgeräten in vorbestimmter Weise,
eine Einrichtung (170) zum gezielten Einschreiben von Daten in die Datenfelder des unterteilten Profinet-Datenrahmens,
eine Einrichtung (180, 190) zum Übertragen des unterteilten Profinet-Datenrahmens zu jedem der N Feldgeräte (30, 40, 50);
wobei
jedes Feldgerät (30, 40, 50) zum Auslesen der für ihn bestimmten Daten aus dem ihm zugeordneten Datenfeld des unterteilten Profinet-Datenrahmens, ausgebildet ist.

8. Steuer- und Datenübertragungsanlage nach Anspruch 7, **dadurch gekennzeichnet, dass**
die Optimierungseinrichtung (100) in der Steuereinrichtung (20) implementiert ist.

9. Steuer- und Datenübertragungsanlage nach Anspruch 7, **dadurch gekennzeichnet, dass**
die Optimierungseinrichtung (100) in einem der Feldgeräte implementiert ist oder eine separate Einrichtung (80) bildet, die mit dem Kommunikationsnetz (60) verbunden ist, wobei die Optimierungseinrichtung (100) folgende weitere Merkmale aufweist:
eine erste Einrichtung (54, 55) zum Empfangen von herkömmlichen Profinet-Datenrahmen von der Steuereinrichtung (20), die jeweils für eines der N Feldgeräte (30, 40, 50) bestimmt sind,
eine Einrichtung (53) zum Auslesen der Daten aus den empfangenen Profinet-Datenrahmen, wobei die Einschreibeeinrichtung (53) zum Einschreiben der ausgelesenen Daten in die Datenfelder des Profinet-Datenrahmens, welche den jeweiligen Feldgeräten zugeordnet sind, ausgebildet ist,
eine zweite Einrichtung (54, 55) zum Empfangen eines für die Steuereinrichtung bestimmten unterteilten Profinet-Datenrahmens,
eine Einrichtung (53) zum Einschreiben der Daten jedes Datenfeldes des unterteilten Profinet-Datenrahmens in einen separaten herkömmlichen Profinet-Datenrahmen,
und eine Einrichtung (54, 55) zum Übertragen der herkömmlichen Profinet-Datenrahmen unter Verwendung der Quellenadresse des jeweiligen Feldgeräts zur Steuereinrichtung.

10. Steuer- und Datenübertragungsanlage nach einem der Ansprüche 7 bis 9, **dadurch gekennzeichnet, dass** wenigstens eines der N Feldgeräte eine Einrichtung zum Erzeugen (51) eines Datenrahmens gemäß dem Profinet-Protokoll zur Übertragung von Daten zu der Steuereinrichtung und eine Einrichtung (52) zum Unterteilen des Profinet-Datenrahmens in N Datenfelder aufweist, wobei jedes Feldgerät zum Einschreiben von Daten in das Datenfeld des unterteilten Profinet-Datenrahmens, welches dem jeweiligen Feldgerät zugeordnet ist, ausgebildet ist.

11. Steuer- und Datenübertragungsanlage nach einem der vorstehenden Ansprüche,
**dadurch gekennzeichnet, dass**
die Optimierungseinrichtung (100) eine Einrichtung zum Einschreiben einer Multicast-Adresse in ein IP-Paket zur Übertragung des unterteilten.Profinet-Datenrahmens zu den N Feldgeräten aufweist.

12. Steuer- und Datenübertragungsanlage nach einem der vorstehenden Ansprüche,
**dadurch gekennzeichnet, dass**
die Optimierungseinrichtung (100) eine Entscheidungseinrichtung (130) aufweist, die in Abhängigkeit von der zu übertragenden Datenmenge zu den N Feldgeräten und/oder von den n Feldgeräten entscheidet, ob die Daten von den N Feldgeräten und/oder zu den N Feldgeräten jeweils in einem einzigen unterteilten Profinet-Datenrahmen übertragen werden, oder ob die Daten von und/oder zu wenigstens einem der N Feldgeräte jeweils in einem separaten herkömmlichen Profinet-Datenrahmen übertragen werden.

13. Steuer- und Datenübertragungsanlage nach einem der vorstehenden Ansprüche,
**dadurch gekennzeichnet, dass**
das IP-basierte Kommunikationsnetz gemäß dem Ethernet-Standard aufgebaut ist.

## Claims

1. Method for the optimised transfer of data between a controller (20) and several field devices (30, 40, 50) which are connected together via an IP-based communication network 860), wherein the transfer of data is controlled by a PROFINET protocol, having the following step:
a) producing a single data frame in accordance with the PROFINET protocol for transferring data to a plurality of N field devices (30, 40, 50); **characterised by** the further steps:
b) dividing the PROFINET data frame into N data fields which are allocated to the N field devices (30, 40, 50) in a predetermined manner;
c) writing data for the field device, which is allocated to the respective data field, into each data field of the PROFINET data frame, if data are provided for this field device;
d) relaying the divided PROFINET data frame to each of the N field devices (30, 40, 50);
e) reading-out the data from each data field by the field device which is allocated to the respective data field; and/or having the following steps:
f) producing a single data frame in accordance with the PROFINET protocol for transferring data of the N field devices (30, 40, 50) to the controller (20);
g) divining the PROFINET data frame into N data fields which are allocated to the N field devices (30, 40, 50) in a predetermined manner;
h) transferring the PROFINET data frame to one of the N field devices (30, 40, 50);
i)upon receipt of the divided PROFINET data frame at one field device, writing data, if available, into the data field assigned to this field device, of the divided PROFINET data frame;
j) repeating steps h) and i) until the divided PROFINET data frame has passed through all N field devices (30, 40, 50).

2. Method as claimed in Claim 1, **characterised by** the following steps:
in dependence upon the amount of data to be transferred to the N field devices and/or from the N field devices, deciding whether the data from the N field devices and/or to the N field devices are transferred in a single divided PROFINET data frame or whether the data from and/or to at least one of the N field devices are transferred in each case in a separate conventional PROFINET data frame.

3. Method as claimed in Claim 1 or 2, **characterised in that** steps a) to e) and/or f) to j) are repeated cyclically until all the data have been transferred completely, in particular in real-time.

4. Method as claimed in Claim 1, 2 or 3, **characterised in that** steps a) to d) are performed by the controller.

5. Method as claimed in Claim 1, 2 or 3, **characterised in that** steps a) to d) are performed by an optimisation device (100) allocated to the controller (20), wherein prior to step a) being performed, the following steps are performed in the controller:
producing a PROFINET data frame for each of the N field devices to which data are to be transferred;
writing the data intended for a field device into the respective PROFINET data frame
transferring the PROFINET data frames using the destination address of the respective field device to the optimisation device, wherein
in step, c) the destination address of each field device is replaced by a multicast address.

6. Method as claimed in Claim 5, **characterised by** the following steps:
receiving a divided PROFINET data frame, which is intended for the controller, at the optimisation device (100);
writing the data of each data field of the divided PROFINET data frame into a separate PROFINET data frame and transferring each PROFINET data frame using the source address of the respective field device to the controller.

7. Control and data transfer system (10) for the optimised transfer of data between a controller (20) and several field devices (30, 40, 50), having a controller (20) and a plurality of N field devices (30, 40, 50) which are connected together using an IP-based communication network (60), wherein a PROFINET protocol is used as the communication protocol,
and a device (100), allocated to the controller (20), for optimising the data transfer, which comprises the following feature:
a device (110) for producing a single data frame in accordance with the PROFINET protocol for transferring data to the N field devices, **characterised in that** the controller (20) also comprises the following features:
a device (120) for dividing the PROFINET data frame into N data fields and for allocating the N data fields to the N field devices in a predetermined manner,
a device (170) for specifically writing data into the data fields of the divided PROFINET data frame,
a devices (180, 190) for transferring the divided PROFINET data frame to each of the N field devices (30, 40, 50);
wherein each field device (30, 40, 50) is formed for reading-out the data, which are intended therefor, from the data field, allocated thereto, of the divided PROFINET data frame.

8. Control and data transfer system as claimed in Claim 7, **characterised in that** the optimisation device (100) is implemented in the controller (20).

9. Control and data transfer system as claimed in Claim 7, **characterised in that** the optimisation device (100) is implemented in one of the field devices or forms a separate device (80) which is connected to the communication network (60), wherein the optimisation device (100) comprises the following further features:
a first device (54, 55) for receiving conventional PROFINET data frames from the controller (20), which are each intended for one of the N field devices (30, 40, 50).
a device (53) for reading-out the data from the received PROFINET data frames, wherein the write-in device (53) is formed for writing the read-out data into the data fields of the PROFINET data frame, which are allocated to the respective field devices,
a second device (54, 55) for receiving a divided PROFINET data frame which is intended for the controller,
a device (53) for writing the data of each data field of the divided PROFINET data frame into a separate conventional PROFINET data frame,
and a device (54, 55) for transferring the conventional PROFINET data frames using the source address of the respective field device to the controller.

10. Control and data transfer system as claimed in any one of Claims 7 to 9, **characterised in that** at least one of the N field devices comprises a device for producing (51) a data frame in accordance with the PROFINET protocol for transferring data to the controller and a device (52) for dividing the PROFINET data frame into N data fields, wherein each field device is formed for writing data into the data field of the divided PROFINET data frame, which data field is allocated to the respective field device.

11. Control and data transfer system as claimed in any one of the preceding Claims, **characterised in that** the optimisation device (100) comprises a device for writing a multicast address into an IP packet for transferring the divided PROFINET data frame to the N field devices.
I

12. Control and data transfer system as claimed in any one of the preceding Claims, **characterised in that** the optimisation device (100) comprises a decision device (130) which decides, in dependence upon the amount of data to be transferred to the N field devices and/or from the n field devices, whether the data from the N field devices and/or to the N field devices are transferred in each case in a single divided PROFINET data frame or whether the data from and/or to at least one of the N field devices are transferred in each case in a separate conventional PROFINET data frame,

13. Control and data transfer system as claimed in any one of the preceding Claims, **characterised in that** the IP-based communication network is configured in accordance with the Ethernet standard.

## Revendications

1. Procédé pour la transmission optimisée de données entre un dispositif de commande (20) et plusieurs appareils de champ (30, 40, 50), qui sont reliés les uns aux autres par un réseau de communication (860) basé sur IP, la transmission de données étant commandée par un protocole de Profinet, comprenant les étapes suivantes :
a) génération d'un unique cadre de données selon le protocole de Profinet pour la transmission de données à une pluralité de N appareils de champ (30, 40, 50), **caractérisé par** les autres étapes suivantes :
b) subdivision du cadre de données de Profinet en N champs de données, qui sont attribués de façon prédéfinie aux N appareils de champ (30, 40, 50) ;
c) enregistrement dans chaque champ de données du cadre de données de Profinet de données pour l'appareil de champ, qui est attribué au champ de données respectif, dans la mesure où des données existent pour cet appareil de champ ;
d) transfert du cadre de données subdivisé de Profinet à chacun des N appareils de champ (30, 40, 50) ;
e) extraction des données de chaque champ de données par l'appareil de champ, qui est attribué au champ de données respectif ; et/ou comprenant les étapes suivantes :
f) génération d'un unique cadre de données selon le protocole de Profinet pour la transmission de données des N appareils de champ (30, 40, 50) au dispositif de commande (20) ;
g) subdivision du cadre de données de Profinet en N champs de données, qui sont attribués de façon prédéfinie aux N appareils de champ (30, 40, 50) ;
h) remise du cadre de données de Profinet à l'un des N appareils de champ (30, 40, 50) ;
i) en cas de réception du cadre de données subdivisé de Profinet sur l'un des appareils de champ enregistrement de données, si disponibles, dans le champ de données attribué à cet appareil de champ, du cadre de données subdivisé de Profinet ;
j) répétition des étapes h) et i) jusqu'à ce que le cadre de données subdivisé de Profinet soit passé par tous les N appareils de champ (30, 40, 50).

2. Procédé selon la revendication 1,
**caractérisé par** les étapes suivantes :
décision en fonction de la quantité de données à transmettre allant aux N appareils de champ et/ou provenant des N appareils de champ pour savoir si les données provenant des N appareils de champ et/ou allant aux N appareils de champ sont transmises dans un seul cadre de données subdivisé de Profinet ou si les données provenant de et/ou allant à au moins l'un des N appareils de champ sont transmises respectivement dans un cadre de données séparé et classique de Profinet.

3. Procédé selon la revendication 1 ou 2, **caractérisé en ce que**
les étapes a) jusqu'à e) et/ou f) jusqu'à j) sont répétées de façon cyclique jusqu'à ce que toutes les données aient été transmises complètement, en particulier en temps réel.

4. Procédé selon la revendication 1, 2 ou 3, **caractérisé en ce que**
les étapes a) jusqu'à d) sont exécutées par le dispositif de commande.

5. Procédé selon la revendication 1, 2 ou 3, **caractérisé en ce que**
les étapes a) jusqu'à d) sont exécutées par un dispositif d'optimisation (100) attribué au dispositif de commande (20), les étapes suivantes étant exécutées dans le dispositif de commande avant l'exécution de l'étape a) :
génération d'un cadre de données de Profinet pour chacun des N appareils de champ, auxquels des données doivent être transmises ;
enregistrement des données définies pour un appareil de champ dans le cadre de données respectif de Profinet ;
transmission des cadres de données de Profinet avec utilisation de l'adresse cible de l'appareil de champ respectif au dispositif d'optimisation, l'adresse cible de chaque appareil de champ étant remplacée à l'étape c) par une adresse de multidiffusion.

6. Procédé selon la revendication 5,
**caractérisé par** les étapes suivantes :
réception d'un cadre de données subdivisé de Profinet, qui est destiné au dispositif de commande, sur le dispositif d'optimisation (100) ;
enregistrement des données de chaque champ de données du cadre de données subdivisé de Profinet dans un cadre de données séparé de Profinet et transmission de chaque cadre de données de Profinet avec utilisation de l'adresse source de l'appareil de champ respectif au dispositif de commande.

7. Installation de commande et de transmission de données (10) pour la transmission optimisée de données entre un dispositif de commande (20) et plusieurs appareils de champ (30, 40, 50), comprenant
un dispositif de commande (20) et une pluralité de N appareils de champ (30, 40, 50), qui sont reliés les uns aux autres avec un réseau de communication (60) basé sur IP, un protocole de Profinet étant utilisé comme protocole de communication,
et un dispositif (100) attribué au dispositif de commande (20) pour l'optimisation de la transmission de données, qui présente la caractéristique suivante :
un dispositif (110) pour la génération d'un unique cadre de données selon le protocole de Profinet pour la transmission de données aux N appareils de champ, **caractérisé en ce que** le dispositif de commande (20) présente également les caractéristiques suivantes :
un dispositif (120) pour la subdivision du cadre de données de Profinet en N champs de et pour l'attribution des N champs de données aux N appareils de champ de façon prédéfinie,
un dispositif (170) pour l'enregistrement ciblé de données dans les champs de données du cadre de données subdivisé de Profinet,
un dispositif (180, 190) pour la transmission du cadre de données subdivisé de Profinet à chacun des N appareils de champ (30, 40, 50) ;
chaque appareil de champ (30, 40, 50) étant conçu pour l'extraction des données qui lui sont destinées à partir du champ de données qui lui est attribué, du cadre de données subdivisé de Profinet.

8. Installation de commande et de transmission de données selon la revendication 7,
**caractérisée en ce que**
le dispositif d'optimisation (100) est mis en oeuvre dans le dispositif de commande (20).

9. Installation de commande et de transmission de données selon la revendication 7,
**caractérisée en ce que**
le dispositif d'optimisation (100) est mis en oeuvre dans l'un des appareil de champ ou forme un dispositif (80) séparé, qui est relié au réseau de communication (60), le dispositif d'optimisation (100) présentant les autres caractéristiques suivantes :
un premier dispositif (54, 55) pour la réception de cadres de données classiques de Profinet du dispositif de commande (20) qui sont destinés à chacun à l'un des N appareils de champ (30, 40, 50),
un dispositif (53) pour l'extraction des données des cadres de données reçus de Profinet, le dispositif d'enregistrement (53) étant conçu pour l'enregistrement des données extraites dans les champs de données du cadre de données de Profinet qui sont attribués aux appareils de champ respectifs,
un second dispositif (54, 55) pour la réception d'un cadre de données, subdivisé et destiné au dispositif de commande, de Profinet,
un dispositif (53) pour l'enregistrement des données de chaque champ de données du cadre de données subdivisé de Profinet dans un cadre de données séparé et classique de Profinet,
et un dispositif (54, 55) pour la transmission des cadres de données classiques de Profinet avec utilisation de l'adresse source de l'appareil de champ respectif au dispositif de commande.

10. Installation de commande et transmission de données selon l'une quelconque des revendications 7 à 9, **caractérisée en ce qu'**au moins l'un des N appareils de champ présente un dispositif pour la génération (51) d'un cadre de données selon le protocole de Profinet pour la transmission de données au dispositif de commande et un dispositif (52) pour la subdivision du cadre de données de Profinet en N champs de données, chaque appareil de champ étant conçu pour l'enregistrement de données dans le champ de données du cadre de données subdivisé de Profinet qui est attribué au champ de données respectif.

11. Installation de commande et de transmission de données selon l'une quelconque des revendications précédentes,
**caractérisée en ce que**
le dispositif d'optimisation (100) présente un dispositif pour l'enregistrement d'une adresse de multidiffusion dans un paquet IP pour la transmission du cadre de données subdivisé de Profinet aux N appareils de champ.

12. Installation de commande et de transmission de données selon l'une quelconque des revendications précédentes,
**caractérisée en ce que**
le dispositif d'optimisation (100) présente un dispositif de décision (130) qui décide en fonction de la quantité de données à transmettre allant aux N appareils de champ et/ou provenant des N appareils de champ si les données provenant des N appareils de champ et/ou allant aux N appareils de champ sont transmises respectivement dans un unique cadre de données subdivisé de Profinet ou si les données provenant et/ou allant à au moins l'un des N appareils de champ sont transmises respectivement dans un cadre de données séparé et classique de Profinet.

13. Installation de commande et de transmission de données selon l'une quelconque des revendications précédentes,
**caractérisée en ce que**
le réseau de communication basé sur IP est conçu selon le standard Ethernet.
